# EUROPEAN PATENT SPECIFICATION

(11) **EP 0 560 768 B1**
(45) Date of publication and mention of the grant of the patent: **02.01.1997**
(21) Application number: 91914638.1
(22) Date of filing: 31.07.1991
(51) Int. Cl.: F16K 31/06

(54) **SOLENOID VALVE WITH HAMMER EFFECT FOR SUDDEN OPENING AND CLOSING ACTIONS**
MAGNETVENTIL MIT HAMMERWIRKUNG ZUM SCHNELLEN ÖFFNEN UND SCHLIESSEN DES VENTILS
ELECTROVANNE A EFFET MARTEAU PERMETTANT DES ACTIONS D'OUVERTURE EE DE FERMETURE RAPIDES

(30) Priority: 01.08.1990 SE 9002548
(43) Date of publication of application: 22.09.1993
(73) Proprietor: AB VOLVO, 405 08 Göteborg (SE)
(72) Inventor: HÖGLUND, Anders, S-430 33 Fjär s (SE); LUNDGREN, Staffan, S-430 63 Hind s (SE); ROSENQUIST, Mats, S-416 56 Göteborg (SE)
(74) Representative: Hellbom, Lars Olof
(86) International application number: SE9100509
(87) International publication number: WO9202749

(56) References cited:
- DE-C- 3 618 104
- US-A- 4 008 876

## Description

The present invention relates to a solenoid valve of the type described in the preamble of claim 1.

In most solenoid valves, the closure member is joined to the armature in such a way that its movement follows the movement of the armature. Already at the initial movement of the armature in the opening direction, the valve closure member begins to move from its valve seat. In order to achieve a rapid opening and closing cycle, such valves require relatively complicated drive circuits. One example of such a valve with a drive circuit specially designed for a rapid operating cycle is shown in US-A-4 620 259.

A valve of the type described in the preamble of claim 1 is disclosed in DE-C2-36 18 104. It has means to open the valve very rapidly when the solenoid is activated but there are no means to automatically close the valve when the solenoid is deactivated. The valve will stay open until it is closed by manually pressing a return button.

The purpose of the present invention is in general to achieve a solenoid valve of the type described by way of introduction which can be made to open very rapidly and stay open during a very short time. In particular, the purpose is to achieve a valve which is particularly suited for use in connection with soot sampling measurements when testing internal combustion engines, where one needs to collect a very limited amount of gas during a very short time.

This is achieved according to the invention by means of a solenoid valve having the characterizing features of claim 1.

The invention is based on the idea of using spring means together with the "hammer effect" which can be achieved by providing a gap between the armature and the valve lifter means. Preferably the gap between the abutment surfaces of the armature and the lifter means is so great that the abutment surface of the armature strikes the abutment surface of the lifter means just before the armature has reached its end position, so that it has a maximum kinetic energy. The kinetic energy of the armature is thus transmitted as an impuls to the lifter means. The shock wave is propagated through the lifter means to the valve closure member which is lifted from its seat. The invention provides a simple and inexpensive valve which can be designed so that the period from when the armature strikes the lifter means until the valve opens is not more than a fraction of a millisecond.

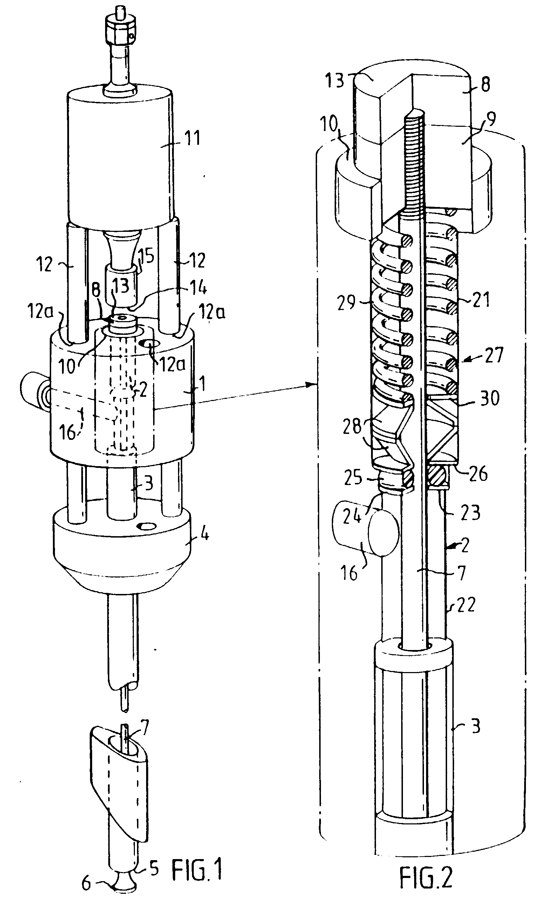

The invention will be described in more detail with reference to examples shown in the accompanying drawings, where Fig 1 shows a schematic perspective view of one embodiment of a valve, and Fig. 2 shows a perspective view of certain details of the valve in Fig. 1 on a larger scale.

The valve comprises a cylindrical metal body 1 with a central bore 2 which leads to a valve tube 3, e.g. of stainless steel, which is fixed in the body 1. The tube 3 extends through a second cylindrical metal body 4 and has its lower end in the form of a valve seat 5 for a valve disc 6, which is supported by a valve rod 7, made of Inconel for example, extending through the valve tube 3 and bore 2. The rod 7 is threaded at its upper end and a valve lifter in the form of two internally threaded cylindrical elements 8,9 is screwed onto the rod 7 and is surrounded by a cylindrical guide 10 at the upper end of the bore 2. The solenoid 11 is fixed at the upper end of three cylindrical guide rods 12 (two shown), which extend through bores 12a in the body 1 and are fixed at their lower ends to the lower body 4. The tube 3 is displaceable relative to the body 4 and, with the aid of adjustment and lock means (not shown), the body 1 is displaceable and lockable in various vertical positions on the guide rods 12. In this manner, the distance between the upper surface 13 of the upper valve lifter element 8 and the downwardly directed opposite surface 14 of the solenoid 11 anchor 15 can be adjusted.

A radio channel 16 in the body 1 communicates with the bore 2 and forms together with the bore and the tube 3 a gas passage. The bore 2 has an upper portion 21 of greater diameter than its lower portion 22. A first shoulder 23 formed between the portions serves as a support for a washer 24 and an O-ring 25, which serves to seal between the valve rod 7 and the wall of the bore 2. The O-ring 25 can be made of Viton®, which can withstand the hot gases encountered when using the valve for sampling combustion gases. A second shoulder 26 forms a support for a return spring package 27 consisting of a pair of spring washers 28, a helical spring 29 and an intermediate washer 30. A spring package of this design has a non-linear return characteristic curve.

In practical tests with a valve device according to the invention, the solenoid was activated with a voltage of 170V. The gap between the surface 13 of the valve lifter element and the surface 14 of the armature in the deactivated state of the solenoid was adjusted so that the surface 14 of the armature struck the surface 13 of the element immediately prior to the lower end position of the armature. The masses of the active components, i.e. of the armature 15 and the valve rod 7 with its valve disc 6 and the lifter elements 8,9, were adapted to each other and to the spring package 27 so that the valve opened and closed in circa 0.7 milliseconds with a maximum stroke length of the rod of circa 0.5 millimeters.

The valve according to the invention can be mounted on the cylinder head of an internal combustion engine and be used for sampling of combustion gases. The radial bore 16 is coupled to an analyzer unit. It can of course also be used in other contexts where there is a rapidly varying cycle. It is especially suitable for use in periodically recurring measurements with a very small "duty cycle", since the major portion of the total cycle is used for acceleration of the armature and only a very small portion for the impact against the lifter elements.

The valve rod must in certain cases be able to withstand both high mechanical stresses and high temperatures. The material in the rod is selected with regard to this and to the response time, the sampling environment etc.

Conceivable materials are, in addition to steel alloys, Inconel® and titanium.

Within the scope of the invention, it is possible to mount a separate movable mass between the armature 13 and the lifter elements 8,9. The armature then strikes this intermediate mass, which in turn strikes the lifter elements. In this manner, an even more rapid valve can be achieved. The weight of the intermediate mass is optimized in relation to the weight of the other movable portions of the valve so that the momentum is transferred from the armature to the valve lifter elements with the least possible loss of energy. In theory, the weight of the intermediate mass should be equal to the sum of the weight of the other movable portions of the valve. In practice, however, this weight must be adjusted taking into account various losses in the device.

The arrangement with an intermediate mass with optimized weight provides advantages in the form of reduced wear, reduced recoil (the intermediate mass should preferably come to a stop after having struck the valve lifter) and reduced risk of deformation.

## Claims

1. A solenoid valve comprising a solenoid, a movable armature (15), a valve closure member arranged to cooperate with a valve seat (5), and lifter means (7,8,9) acting between the armature and the valve closure member, arranged to transmit the movement of the armature in the valve opening direction to the valve closure member, wherein the armature (15) and lifter means (7,8,9) have abutment surfaces (14,13), which in the deactivated state of the solenoid (11) are spaced from each other, and are so arranged that the abutment surface (14) of the armature, when the solenoid is activated, strikes the abutment surface (13) of the lifter means after a certain movement of the armature, and wherein the valve closure means is a valve disc (6) securely joined to a valve spindle (7), said spindle being joined to a mass (8,9), which is deplaceably mounted in a guide (10) and has one of said abutment surfaces (13) characterized in that spring means (27) are arranged which, when the solenoid (11) is deactivated, hold the valve disc (6) against its seat.

2. Solenoid valve according to Claim 1, characterized in that the lifter means comprise a mass which is movable relative to the armature (15) and the spindle (7), which has said abutment surface and an additional abutment surface disposed after a certain movement of the mass to strike an abutment surface (13) on a mass (8) solidly joined to the spindle.

3. Solenoid valve according to Claim 1, characterized in that the armature (15) is movable between two end positions and is so arranged relative to the abutment surface (13) of the lifter means (7,8,9) that the abutment surface of the armature strikes the abutment surface of the lifter means when the armature, after activation of the solenoid (11), has moved a major portion of the distance between its end positions.

## Patentansprüche

1. Magnetventil mit einer Magnetspule, einem beweglichen Anker (15), einem Ventil-Schließelement, das mit einem Ventilsitz (5) zusammenarbeitet und mit einer Hubeinrichtung (7, 8, 9), die zwischen dem Anker und dem Ventilschließelement wirkt und so angeordnet ist, daß sie die Bewegung des Ankers in Öffnungsrichtung des Ventils auf das Ventilschließelement überträgt, wobei sowohl der Anker (15) als auch die Hubeinrichtung (7, 8, 9) Anschlagflächen (14, 13) haben, die im entregten Zustand der Magnetspule (11) einen Abstand voneinander haben und die so angeordnet sind, daß die Anschlagfläche (14) des Ankers dann, wenn die Magnetspule erregt wird, nach einer gewissen Bewegung des Ankers auf die Anschlagfläche (13) der Hubeinrichtung aufschlägt und wobei ferner das Ventil-Schließelement ein Ventilteller (6) ist, der fest mit einem Ventilstößel (7) verbunden ist, der seinerseits mit einer Masse (8, 9) verbunden ist, die verschieblich in einer Führung (10) gelagert ist und ihrerseits eine der Anschlagflächen (13) aufweist, dadurch **gekennzeichnet**, daß eine Federeinrichtung (27) vorgesehen ist, die dann, wenn die Magnetspule (11) entregt wird, den Ventilteller (6) gegen seinen Sitz hält.

2. Magnetventil nach Anspruch 1, dadurch gekennzeichnet, daß die Hubeinrichtung eine Masse umfaßt, die relativ zum Anker (15) und zum Stößel (7) bewegbar ist, die ferner die Anschlagfläche sowie eine zusätzliche Anschlagfläche aufweist, die so ausgelegt ist, daß sie nach einer gewissen Bewegung der Masse auf die Anschlagfläche (13) an einer Masse (8) aufschlägt, die fest mit dem Stößel verbunden ist.

3. Magnetventil nach Anspruch 1, dadurch gekennzeichnet, daß der Anker (15) zwischen zwei Endstellungen beweglich und relativ zur Anschlagfläche (13) der Hubeinrichtung (7, 8, 9) so angeordnet ist, daß die Anschlagfläche des Ankers auf die Anschlagfläche der Hubvorrichtung dann auftrifft, wenn der Anker nach einer Erregung der Magnetspule (11) den größten Teil dieses Abstandes zwischen seinen Endstellungen überwunden hat.

## Revendications

1. Electrovanne comprenant un solénoïde, un induit déplaçable (15), un organe de fermeture de vanne agencé pour coopérer avec un siège (5) de vanne, et des moyens de soulèvement (7,8,9) agissant entre l'induit et l'organe de fermeture de vanne, agencés pour transmettre le mouvement de l'induit suivant la direction d'ouverture de la vanne à l'organe de fermeture de vanne, dans laquelle l'induit (15) et les moyens de soulèvement (7,8,9) comportent des surfaces de butées (14,13) qui, dans l'état désactivé du solénoïde (11), sont espacées l'une de l'autre, et sont agencées de telle manière que la surface de butée (14) de l'induit, lorsque le solénoïde est activé, heurte la surface de butée (13) des moyens de soulèvement après un certain déplacement de l'induit, et dans laquelle les moyens de fermeture de vanne sont un disque de vanne (6) reliés de façon fixe à une tige de vanne (7), cette tige étant reliée à une masse (8,9) qui est montée de façon déplaçable dans un guide (10) et comporte une des surfaces de butée (13), caractérisée en ce que des moyens à ressort (27) sont agencés, lesquels, lorsque le solénoïde (11) est désactivé, maintiennent le disque (6) de vanne contre son siège.

2. Electrovanne selon la revendication 1, caractérisée en ce que les moyens de soulèvement comprennent une masse qui est déplaçable par rapport à l'induit (15) et à la tige (7), qui comporte la surface de butée et une surface supplémentaire disposée pour, après un certain déplacement de la masse, heurter une surface de butée (13) sur une masse (8) reliée de façon solide à la tige.

3. Electrovanne selon la revendication 1, caractérisée en ce que l'induit (15) est déplaçable entre deux positions d'extrémité et est agencé par rapport à la surface de butée (13) de moyens de soulèvement (7,8,9) de manière que la surface de butée de l'induit heurte la surface de butée des moyens de soulèvement lorsque l'induit, après activation du solénoïde (11), s'est déplacé d'une plus grande partie de la distance séparant ses positions d'extrémité.
